(19) Europäisches Patentamt
European Patent Office
Office européen des brevets

(11) **EP 2 773 110 A1**

(12) **EUROPEAN PATENT APPLICATION**
published in accordance with Art. 153(4) EPC

(43) Date of publication:
**03.09.2014 Bulletin 2014/36**

(51) Int Cl.:
***H04N 7/30*** (0000.00)  ***H03M 7/40*** (2006.01)

(21) Application number: **12844450.2**

(22) Date of filing: **17.10.2012**

(86) International application number:
**PCT/JP2012/076815**

(87) International publication number:
**WO 2013/061840 (02.05.2013 Gazette 2013/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.10.2011 JP 2011236672**

(71) Applicant: **Gnzo Inc.
Kanagawa 258-0015 (JP)**

(72) Inventors:
• **KASAI, Hiroyuki**
**Chofu-shi**
**Tokyo 182-8585 (JP)**

• **UCHIHARA, Naofumi**
**Chofu-shi**
**Tokyo 182-8585 (JP)**
• **UEHARA, Yukio**
**Ashigarakami-gun**
**Kanagawa 258-0015 (JP)**

(74) Representative: **Piotrowicz, Pawel Jan Andrzej et
al**
**Venner Shipley LLP
Byron House
Cambridge Business Park
Cowley Road
Cambridge CB4 0WZ (GB)**

(54) **BYTE ALIGNMENT DEVICE, AND BYTE ALIGNMENT METHOD**

(57)    The present invention provides technology for perfoming byte alignment on a bit stream. Adjustment coefficient sequences, that are a high-frequency components within quantized block coefficient sequences, are replaced with predetermined base coefficient sequences. A bit quantity that is to be increased for byte alignment is calculated based on code amount of a bit stream that has been acquired by subjecting the block coefficient sequences, that are the adjustment coefficient sequences that have been replaced with base coefficient sequences, to variable length encoding. Appropriate adjustment coefficient sequences that will replace the base coefficient sequences are searched based on bit quantity that is to be increased. The retrieved adjustment coefficient sequences are then inserted into high frequency components corresponding to base coefficient sequences.

FIG.2

## Description

### Technical Field

The present invention relates to technology for carrying out byte alignment on bit streams that have been acquired by variable length encoding of a block coefficient sequence.

### Background Art

In recent years editing processing of high quality video information is being carried out in various environments. Editing processing of video information includes, for example, recognition processing for video information during transmission, editing processing of a single video, and combination processing for a plurality of videos etc. It has been envisaged to carry out this type of editing processing of video information not only on servers of data centers or individual personal computers, but also using mobile terminals owned by individuals, networked home electric appliances, audiovisual devices mounted in vehicles, routers within networks etc. Here, editing processing of video information is normally carried out in units of MB groups (specifically, MB lines made up of MBs, independent MBs, groups of arbitrary MBs etc.). Accordingly, editing processing for video information is carried out in units of video bit streams corresponding to MB groups. MB means macroblock here.

On the other hand, video bit streams are generated by subjecting quantized block coefficient sequences to variable length encoding, in the case of H.264. Specifically, a video bit stream corresponding to an MB group is generated as encoded information in bit units by variable length encoding of a block coefficient sequence belonging to an MB group. It is known that a bit stream that has been generated in this way is not always segmented into bytes, even if video signal information that was the object of encoding (coefficient sequence) was byte segmented information.

In the case where a video bit stream has not been segmented into bytes, in data processing operations, called copy and seek, of the video bit stream, bit shift operation processing becomes necessary, and there is a problem with increased load on the device.

Patent literature 1 below describes a method of subjecting a bit stream that is in frame units to byte alignment using a slice header that is used with H.264/AVC. However, with the technology of patent literature 1, since bit quantity adjustment of a slice header, that has the entire bit stream of a frame constituting an object, is assumed, it is not possible to carry out byte alignment for arbitrary MB groups, resulting in lack of flexibility in use. Also, since there is an upper limit on the number of slice headers that can be inserted into a single frame, there is a problem that carrying out byte alignment for MBs of arbitrary locations is difficult.

### Citation List

### Patent Literature

Patent literature 1
International Patent Publication No.: WO2009/093647

### Summary of the Invention

### Techical Problem

The present invention has been conceived in view of the above-described situation. One object of the present invention is to provide technology that is capable of avoiding shift operation processing in bit stream extraction processing, and suppressing processing load. A specific object of the present invention is to provide technology to adjust the bit quantity of a bit stream encoded in MB group units by adjusting coefficient sequences of blocks within MBs, and in this way carry out byte alignment of a bit stream created from arbitrary MB groups.

### Solution To Problem

Means for solving the above-described problems can be described as in the following aspects.

(Aspect 1)

A byte alignment device, for carrying out byte alignment on bit streams that have been acquired by variable length encoding of a block coefficient sequence, comprising:

a base coefficient sequence insertion section, a desired increased bit quantity calculation section, an adjustment coefficient sequence detection section, and an adjustment coefficient sequence insertion section, wherein the base coefficient sequence insertion section is configured to replace adjustment coefficient sequences, which are high-frequency components within quantized block coefficient sequences, with predetermined base coefficient sequences, the desired increased bit quantity calculation section is configured to calculate a bit quantity that is to be increased for byte alignment, based on code amount of a bit stream that has been acquired by subjecting the block coefficient sequences, in which the adjustment coefficient sequences have been replaced with the base coefficient sequences, to variable length encoding, the adjustment coefficient sequence detection section is configured to detect adjustment coefficient sequences that will replace the base coefficient sequences, based on the bit quantity that is to be increased, and the adjustment coefficient sequence insertion section is configured to insert the adjustment coefficient sequences that have been detected into high-frequency components corresponding to the base coefficient sequences.

(Aspect 2)

The byte alignment device of aspect 1, further comprising a guard coefficient insertion section, wherein the guard coefficient insertion section is configured to replace coefficients, that are positioned one coefficient closer to a low frequency side than the high frequency component coefficient sequence of the block coefficient sequences, with guard coefficients, and the guard coefficients restrict influence on code amount of the bit stream due to a value of a coefficient that is more to a low frequency side than a guard coefficient.

(Aspect 3)

The byte alignment device of aspect 1 or aspect 2, wherein the adjustment coefficient sequence detection section is configured to detect the appropriate adjustment coefficient sequence based on factors that influence code amount of the bit stream that has been subjected to variable length encoding, in addition to the bit quantity to be increased.

(Aspect 4)

The byte alignment device of any one of aspects 1 - 3, further comprising a search DB, and wherein the search DB is configured so that it is possible to detect the appropriate adjustment coefficient sequence based on the bit quantity to be increased and/or factors that influence code amount of the bit stream that has been subjected to variable length encoding.

(Aspect 5)

A bit stream generating device, comprising the byte alignment device of any one of aspects 1 - 4, and a variable length encoding section, wherein the variable length encoding section, when subjecting coefficient sequences of adjacent blocks that are adjacent to object blocks that are the object of byte alignment by the byte alignment device, to variable length encoding, is configured to carry out restriction of a prediction mode of the encoding of the object blocks, and/or fix coefficient values used in encoding.

(Aspect 6)

A bit stream generating method, used in order to carry out byte alignment on bit streams that have been acquired by variable length encoding of a block coefficient sequence, comprising:

a step of replacing adjustment coefficient sequences, that are a high-frequency components within quantized block coefficient sequences, with predetermined base coefficient sequences, a step of calculating a bit quantity that is to be increased for byte alignment, based on code amount of a bit stream that has been acquired by subjecting the block coefficient sequences, in which the adjustment coefficient sequences have been replaced with base coefficient sequences, to variable length encoding, a step of detecting appropriate adjustment coefficient sequences that will replace the base coefficient sequences, based on bit quantity that is to be increased, and a step of inserting the detected adjustment coefficient sequences into high-frequency components corresponding to the base coefficient sequences.

(Aspect 7)

A computer program for causing execution of the method of aspect 6 on a computer.

(Aspect 8)

A data structure made up of block coefficient sequences, wherein
high-frequency component coefficients of the block coefficient sequences are made adjustment coefficient sequences for carrying out byte alignment of a bit stream that has been subjected to variable length encoding,
guard coefficients are inserted into coefficients that are one coefficient closer to the low-frequency side than the adjustment coefficient sequences, and
the guard coefficients suppress influence on variable length encoding conditions due to values of low-frequency component coefficients that are closer to the low-frequency side than this guard coefficient.

Regarding the computer program and/or the data structure described above, it can be utilized on a computer by being stored in an appropriate storage medium such as, for example, an electrical magnetic or optical medium. Also, this storage medium can be utilized by the Internet for example it may be a storage medium on a cloud computing system.

**Advantageous Affect Of The Invention**

According to the present invention, it is possible to provide technology to carry out byte alignment on a bit stream that has been created from arbitrary MB groups.

**Brief Description Of The Drawings**

Fig. 1 is a block diagram for describing the schematic structure of an encoding device used in a byte alignment processing section of a first embodiment of the present invention.

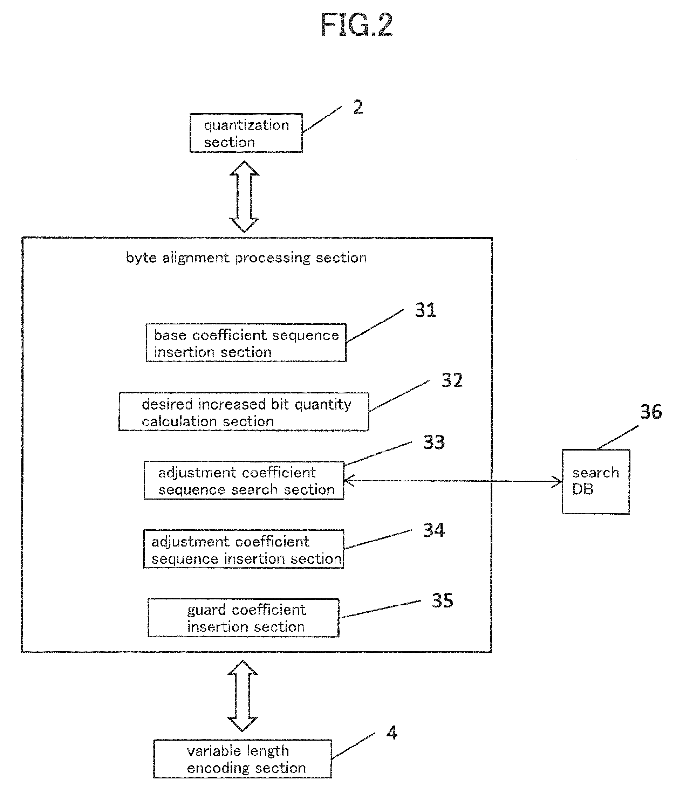

Fig. 2 is a block diagram for describing the schematic structure of a byte alignment processing section of a first embodiment.
Fig. 3 is an explanatory drawing for describing structure of a search table.
Fig. 4 is a flowchart for describing an overall procedure of encoding processing of the first embodiment.
Fig. 5 is a flowchart for describing a procedure for byte alignment processing of the first embodiment.
Fig. 6 is an explanatory drawing for describing a block coefficient sequence.
Fig. 7 is an explanatory drawing for describing insertion of an adjustment coefficient sequence.
Fig. 8 is a flowchart for describing a search table generation procedure.
Fig. 9 is a flowchart for describing restricting or fixing of encoding modes of a byte alignment processing procedure of the first embodiment. Fig. 9 (a) shows adjustment object blocks with a first embodiment. Fig. 9(b) shows adjustment object blocks with a second embodiment, and shows restricting or fixing of encoding modes related to these blocks.

**Description Of The Embodiments**

An encoding system of a first embodiment of the present invention will be described in the following with reference to the attached drawings.

(Structure of the embodiment)

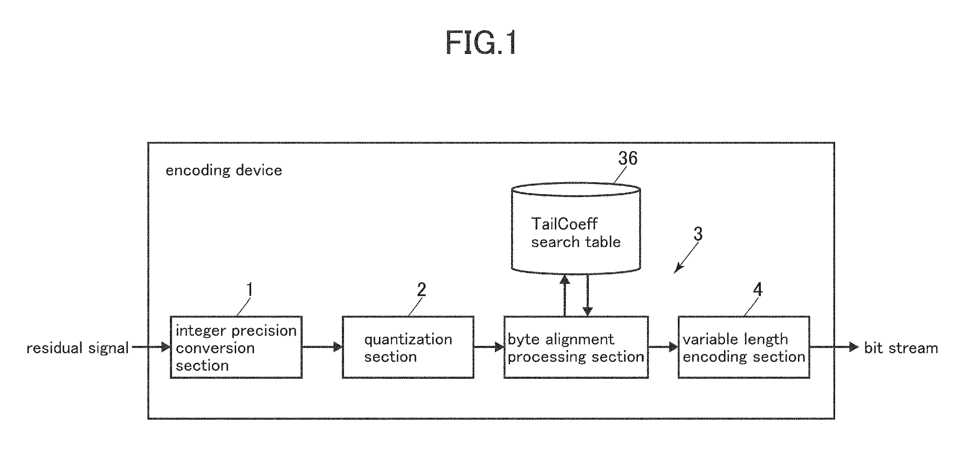

First, the overall schematic structure of an encoding device that uses the encoding system of this embodiment will be described with reference to Fig. 1.
This system comprises an integer precision conversion section 1, a quantization section 2, a byte alignment processing section 3, and a variable length encoding section 4. Each element will be described below.

(Integer Precision Conversion Section)

The integer precision conversion section 1 is input with a block coefficient sequence (in the case of intra frame encoding) or a block coefficient sequence residual signal (in the case of inter frame encoding). In this specification, both a block coefficient sequence and a residual signal for a block coefficient sequence will be referred to as a block coefficient sequence. The integer precision conversion section 1 converts real precision input values to integer precision, and since this can be configured using the same implementation as with conventional H.264, detailed description will be omitted.

(Quantization Section)

The quantization section 2 is a functional element for subjecting a block coefficient sequence, that has been subjected to integer precision conversion, to quantization. This quantization section 2 can also be configured with the same implementation as for conventional H.264, and so detailed description is omitted.

(Byte Alignment Processing Section)

The byte alignment processing section 3 is a functional element corresponding to one embodiment of a byte alignment device of the present invention.

The byte alignment processing section 3 of this embodiment comprises a base coefficient sequence insertion section 31, a desired increased bit quantity calculation section 32, an adjustment coefficient sequence detection section 33, an adjustment coefficient sequence insertion section 34, a guard coefficient insertion section 35, and a search DB 36.

The base coefficient sequence insertion section 31 is configured to replace coefficient sequences for adjustment (hereafter referred to as TailCoeff), which are high-frequency components within quantized block coefficient sequences, with predetermined base coefficient sequences.

The desired increased bit quantity calculation section 32 is configured to calculate a bit quantity that is to be increased for byte alignment, based on code amount of a bit stream that has been acquired by subjecting the block coefficient sequences, in which the coefficient sequences for adjustment have been replaced with base coefficient sequences, to variable length encoding.

The adjustment coefficient sequence detection section 33 is configured to detect appropriate adjustment coefficient sequences that will replace base coefficient sequences (high frequency component coefficient sequences), based on the bit quantity that is to be increased. Further, the adjustment coefficient sequence detection section 33 of this embodiment is configured to detect appropriate adjustment coefficient sequences based on factors (that will be described later) that influence code amounts of bit streams that have been subjected to variable length encoding, in addition to the bit quantity that is to be increased.

The adjustment coefficient sequence insertion section 34 is configured to insert the adjustment coefficient sequences that have been detected into high-frequency components corresponding to the base coefficient sequences.

The guard coefficient insertion section 35 is configured to replace coefficients that are one position closer to the lower frequency side than a high frequency component coefficient sequence of a block coefficient sequence with guard coefficients (hereafter referred to as GuardCoeff). A fixed coefficient value (with this example, a coefficent of an absolute value of 2 or greater) is inserted into a GuardCoeff. Here, the guard coefficients restrict influence on code amount of the bit stream due to a value of a coefficient that is more to a low frequency side than a guard coefficient (described later). Position of the guard coefficients shall be already known at the time of insertion of the guard coefficients. Search of guard coefficient position will be described later.

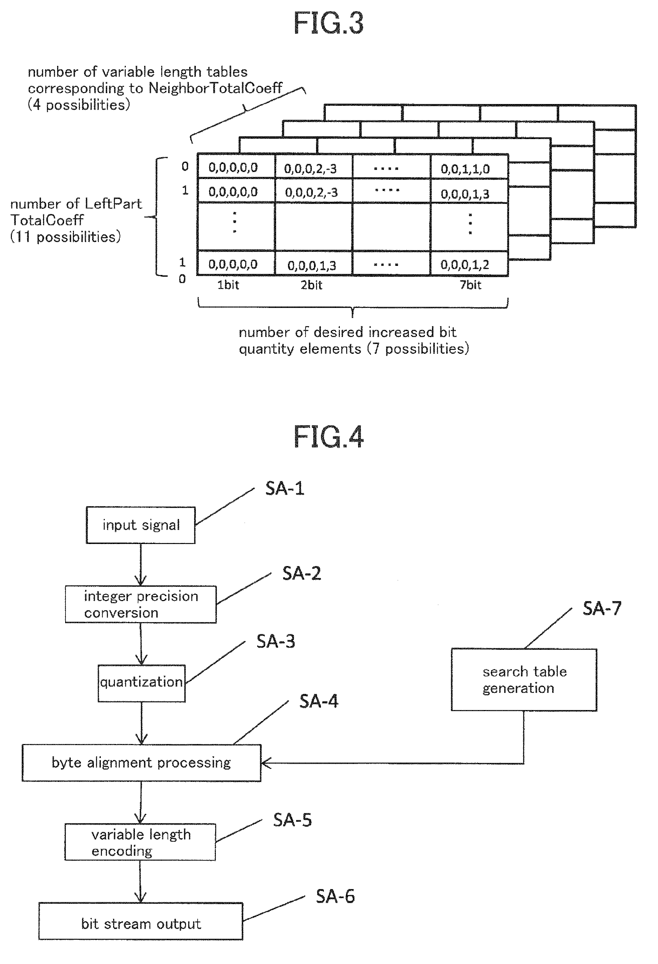

The search DB 36 is configured so that it is possible to detect the appropriate adjustment coefficient sequence based on the bit quantity to be increased and/or factors that influence code amount of the bit stream that has been subjected to variable length encoding. The search DB 36 of this embodiment is specifically a table structure (refer to Fig. 3), but the structure of the DB is not particularly restricted. In this specification, a search DB will be termed a search table. With this embodiment, some parameters that influence bit stream code amount are made retrieval keys of the search table, while remaining parameters are made fixed values.

Detailed structure of the byte alignment processing section 3 of this embodiment will be described later as operation of this embodiment.

(Variable Length Encoding Section)

The variable length encoding section 4 is a functional element for carrying out variable length encoding on the coefficient sequences of each block

The variable length encoding section 4 of this embodiment is "configured to carry out restriction of prediction modes for encoding of object blocks and/or fixing of coefficient values used in encoding, when carrying out variable length encoding of coefficient sequences of adjacent blocks that are adjacent to object blocks constituting the object of byte alignment processing by the byte alignment device". Apart from this point, the variable length encoding section 4 of this embodiment can be configured in the same manner as for variable length encoding using CAVLC (Context Adaptve Variable Length Coding) of H.264, for example.

Detailed structure of the variable length encoding section 4 of this embodiment will be described later as the operation of this embodiment.

(Bit Stream Generating Procedure Of This Embodiment)

The bit stream generating procedure of this embodiment will be described in the following with further reference to Fig. 4. In the following example, an MB group constituting an object of byte alignment is made an MB line formed by MBs arranged in a single line. Also, a block constituting an object of coefficient adjustment in this example is made the final block of the final MB of the MB line.

(Steps SA-1 to 3 in Fig. 4)

First, input of a video signal before encoding is received, and a coefficient sequence of that video signal is converted with integer precision. Further, the coefficient sequence that has been converted with integer precision is subjected to quantization. Processing up to that point may be the same as for normal H.264, and so detailed description is omitted.

(Steps SA-4 to 5 in Fig. 4)

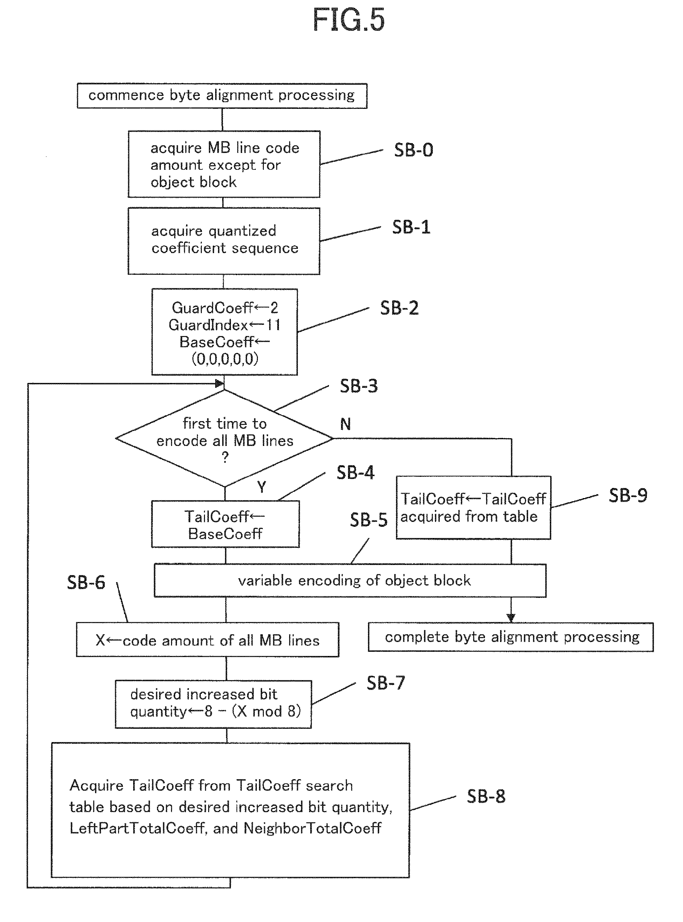

Next, a procedure for byte alignment processing by the byte alignment processing section 3 of this embodiment will be described with further reference to Fig. 5.

(Step SB-0 in Fig. 5)

The variable length encoding section 4 carries out variable length encoding for "each block, except for blocks that were subjected to adjustment of coefficient sequence (object blocks)". From a total number of bits of bit streams obtained as a result, it is possible to acquire bit quantity for bit streams of MB lines except for the object blocks. It is possible to acquire code amount for bit streams of all the MB line by adding this bit quantity and code amount of bit streams due to encoding of object block coefficient sequences. This code amount acts as a benchmark for byte alignment processing.

(Step SB-1 in Fig. 5)

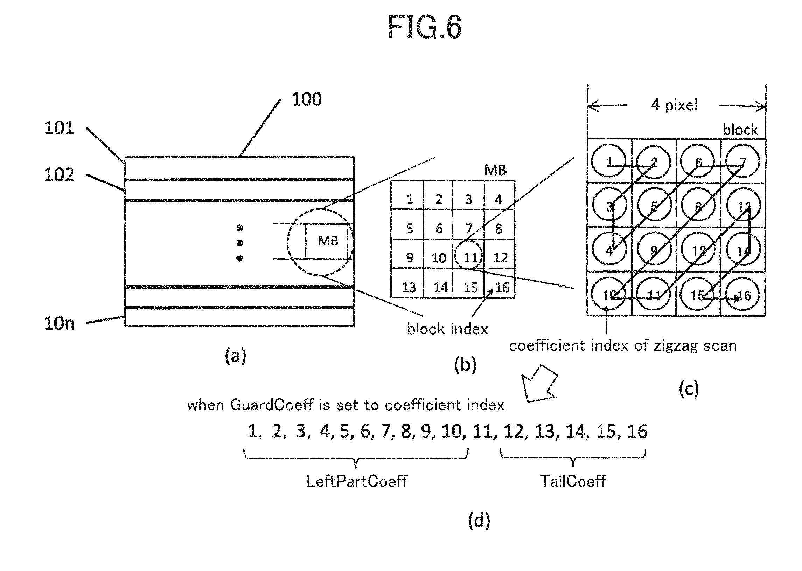

First, the byte alignment processing section 3 acquires block coefficient sequences in the object block that have been subjected to quantization processing from the quantization section 2. Here, an example of a block coefficient sequence will be supplementarily described with reference to Fig. 6. With H.264, a frame 100 constitutes in a single image is made up of a plurality of MB lines 101 to 10n, and each MB line is made up of a plurality of MBs (refer to Fig. 6(a)). Each MB is then made up of a plurality of blocks (refer to Fig. 6(b)). With H.264, each block has a 4x4 pixel format. In Fig. 6, indices 1 to 16 are attached to each block. It is then possible to determine a quantized coefficient value corresponding to each index by quantization. By performing zigzag scanning (refer to Fig 6 (c)) of such coefficient values for each index it is possible to generate a coefficient sequence for the block (refer to Fig. 6(d). The numerical characters shown in Fig. 6(d) represent indices of the coefficients, and do not represent coefficient values. In Fig. 6(d), coefficient index 11 constitutes a guard coefficient, which will be described later, coefficient sequences further to the high-frequency side (right side in Fig 6) than this are coefficient sequences that will be replaced for adjustment (hereafter sometimes referred to as TailCoeff), and coefficient sequences further to the low-frequency side (left side in Fig. 6) than the guard coefficient are coefficient sequences representing signal content (hereafter sometimes referred to as LeftPartCoeff). In this example, the index number of a block constituting an object for coefficient sequence adjustment is 16 (refer to Fig. 6(b)).

(Step SB-2 in Fig. 5)

Next, the base coefficient sequence insertion section 31 substitutes a base coefficient sequence that has been prepared in advance (hereafter sometimes referred to as BaseCoeff) for the previously described TailCoeff. With this embodiment a value of (0, 0, 0, 0) is used as the base coefficient sequence. This is in order, in CAVLC, to be able to minimize encoded bit quantity, when using a coefficient sequence of (0, 0, 0, 0).

(Step SB-3 in Fig. 5)

Next, it is confirmed whether or not encoding of the block coefficient sequence is the first after the initial TailCoeff has been replaced. Specifically, variable length encoding of the block coefficient sequence is carried out twice for byte alignment. The fist time a coefficient sequence having a TailCoeff replaced with a base coefficient sequence is subjected to variable length encoding, and the second time a coefficient sequence having a TailCoeff replaced with an adjustment coefficient sequence is subjected to variable length encoding. If the determination here is Yes, processing advances to step SB-4.

(Steps SB-4 and SB-5 in Fig. 5)

Next, a TailCoeff is replaced with a BaseCoeff, and variable length encoding is carried out by the variable length encoding section 4 using the coefficient sequence after replacement.

(Steps SB-6 and SB-7 in Fig. 5)

Next, the desired increased bit quantity calculation section 32 calculates an X modulo 8 residual amount, namely X mod 8, with a code amount that has been obtained by summing code amount of an object block obtained by variable length encoding and a code amount acquired in step SB-0 (namely code amount for all MB lines) as X. A difference between this residual amount and 8 is then calculated. The result is the desired increase amount for the number of bits in the bit stream.

(Step SB-8 in Fig. 5)

Next, an adjustment coefficient sequence that should be inserted into the TailCoeff is searched for and acquired from a search table 36, using the acquired desired increase amount and other coefficient characteristics. Specifically, in the search table 36 it is possible to search for an appropriate adjustment coefficient sequence based on respective factors that affect increased bit quantity (in this example the desired increases bit quantity, LeftPartTotalCoeff and NeighborTotalCoeff). This search will be described further later.

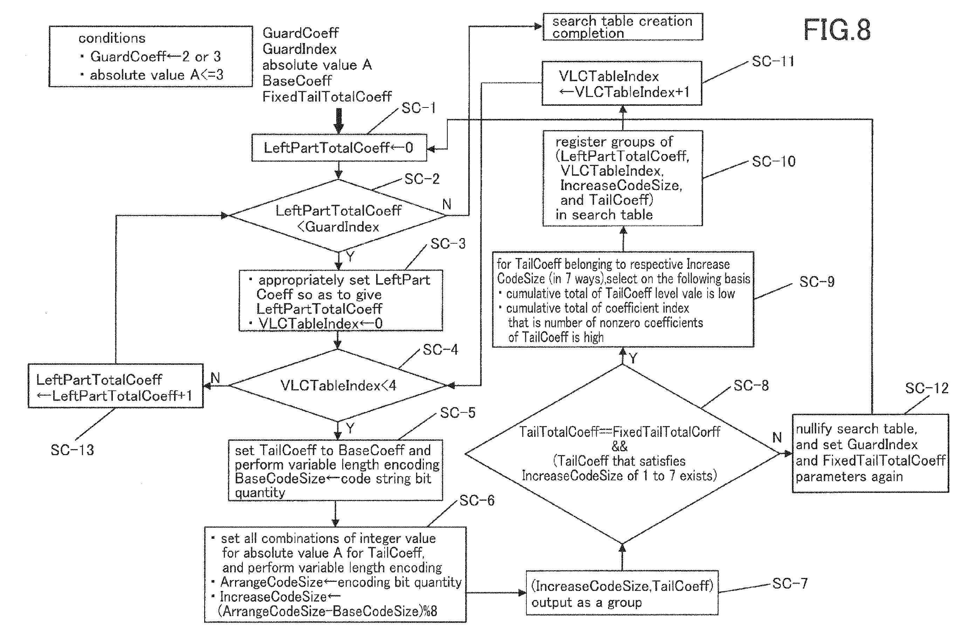

The position of a guard coefficient (namely the GuardIndex) is acquired at the time of generating the search table shown in Fig 8, and this will also be described later.

Terminology used in the description of the coefficient sequence is shown in table 1 below.

Table 1: Coefficient Sequence Structure For Byte Alignment Object Block

| Information | Value | Description |
|---|---|---|
| Absolute value A | 3 | Numerical value domain of TailCoeff (when absolute value A is 3: made values of -3, -2, -1, 0, 1, 2, 3) |
| GuardCoeff | 2 | fixed coefficient value |
| GuardIndex | 11 | Index of GuardCoeff (position) |
| GuardTotalCoeff | 1 | Number of nonzero coefficients of GuardCoeff |
| LeftPartCoeff | coefficient sequence | Coefficient sequence positioned more to the low frequency side than GuardCoeff |
| LeftPartTotalCoeff | 6 | Number of nonzero coefficients of Left Part |
| TailCoeff | coefficient sequence | Adjustment coefficient sequence (this is a coefficient sequence replaced with a previously generated adjustment coefficient sequence, namely, corresponding adjustment coefficient sequence is obtained from previously generated adjustment coefficient sequence table, based on LeftPartTotalCoeff, TotalCoeff of adjacent blocks and desired increased bit number), and replacement is performed |
| TailTotalCoeff | 2 | Number of nonzero coefficients of TailCoeff |

Also, parameters constituting selective factors of the encoding table for variable length encoding, and measures taken in this embodiment, are shown in table 2 below.

[Table 2] Types Of Parameter Affecting Code Amount

| No | Item | Defined Value | Usage Methode | Remarks |
|---|---|---|---|---|
| 1 | TailTotalCoeff | TailTotalCoeff of Tail Coeff replaced by adjustment coefficient sequence is same value as FixedTailCoeff | Fixed Value | Number of nonzero coefficients of TailCoeff (elements of TotalCoeff) *TotalCoeff=LeftPartTotalCoeff + GuardTotalCoeff + TailTotalCoeff |
| 2 | Numerical domain of TailCoeff (Absolute Value A) | absolute value 3 or less | Fixed Value | Reason: since encoding table used in Level of LeftPartCoeff changes depending on value of numerical value domain of TailCoeff, this change is restricted by this setting value |
| 3 | GuardCoeff | coefficient of absolute value 2 or greater | Fixed Value | Reason: when absolute value is 0 or 1, at the time of determining TrailingOnes, TrailingOnesFlag and RunBefore there is a possibility that coefficient of LeftPartCoeff will also be an object, and since this influences encoding, the impact is suppressed by placing a coefficient of an absolute value of 2 or greater in GuardCoeff |
| 4 | GuardTotalCoeff | 1 (always 1 because of coefficient value of GuardCoeff) | Fixed Value | Number of nonzero coefficients of GuardCoeff (elements of TotalCoeff) |
| 5 | GuardIndex | 11 (set to appropriate value depending on operation method) | Fixed Value | Determine appropriate position at the time of search table generation with index position of GuardIndex, depending on operation method. |
| 6 | FixedTailTotalCoeff | 2 (set to appropriate value depending on operation method) | Fixed Value | This is the number of nonzero coefficients of adjustment coefficient sequence, and an appropriate value is set at the time of search table generation depending on operation method. |
| 7 | LeftPartTotalCoeff | - | Search Table Index | Number of non-zero coefficients of LeftPartCoeff (elements of TotalCoeff) |
| 8 | IncreaseCodeSize | - | Search Table Index | Desired increased bit quantity |
| 9 | NeighborTotalCoeff | - | Search Table Index, encoding table index | Average value of number of nonzero coefficients of adjacent blocks |
| 10 | BaseCoeff | all 0 coefficient sequence (0, 0, 0,0) | Fixed Value | base coefficient sequence |
| 11 | TrailingOnes | value inherent to TailCoeff due to GuardCoeff | | |

(continued)

| No | Item | Defined Value | Usage Methode | Remarks |
|----|------|---------------|---------------|---------|
| 12 | RunBefore | value inherent to TailCoeff due to GuardCoeff | | |
| 13 | TrailingOnesFlag | value inherent to TailCoeff due to GuardCoeff | | |

(Steps SB-3, SB-9 and SB-5 in Fig. 5)

Next, the procedure returns once more to step SB-3, and after that advances to step SB-9. Further, the adjustment coefficient sequence insertion section 34 inserts an adjustment coefficient sequence that has been obtained from the search table into the TailCoeff. Variable length encoding is carried out on the block coefficient sequence that has had the adjustment coefficient sequence inserted, and the obtained bit stream is output. By constructing a bit stream of the MB line using the bit stream that has been acquired in this way, it is possible to implement byte alignment.

With this embodiment, as has been described, it is possible to realize byte alignment with a simple procedure. It is also possible to execute processing for the previously described byte alignment with blocks belonging to an arbitrary MB as the object.

Also, with this embodiment, since a guard coefficient has been inserted into the block coefficient sequence, there is the advantage that it is possible to suppress any affect on encoding conditions, even if the TailCoeff is replaced with an adjustment coefficient sequence. However if CAVLC is assumed, the value of a guard coefficient becomes 2 or 3. This point will be described later.

Here, the advantage of guard coefficient insertion will be supplementarily described.

At the time of actual variable length encoding, since a CoeffToken, which is a combination of TotalCoeff and TrailingOnes, is also encoded, that code amount affects the code amount of the overall bit stream. As a result of guard coefficient insertion, it is possible to suppress the effect on code amount of the CoeffToken parameter caused by change to the TailCoeff. However, since the encoding table for CoeffToken is determined using an average value for number of nonzero coefficients of adjacent blocks (NeighborTotalCoeff), the code amount for CoeffToken will differ depending on NeighborTotalCoeff even if all coefficient sequences are the same. Accordingly, even in the event that a TailCoeff exists for which a particular bit quantity increase has been executed for a particular LeftPartCoeff, if NeighborTotalCoeff is different, it is not possible to execute a desired bit quantity increase even with the same TailCoeff. For the above mentioned reasons, as long as NeighborTotalCoeff is the same (table for encoding CoeffToken is the same), then using the above parameter settings it becomes possible to handle LeftPartCoeff and TailCoeff independently, and with coefficient sequence adjustment of the TailCoeff it becomes possible to control to increase bit amount between 1 to 7 without affecting encoding of coefficient sequences other than this (LeftPartCoeff, GuardCoeff).

(Step SA-6 in Fig. 4)

Next, a bit stream that has been generated by variable length encoding of a block coefficient sequence that has been subjected to byte alignment processing is output. These processes themselves can be the same as conventional processes, and so detailed description is omitted.

(Step SA-7 in Fig. 4: search table generation procedure)

Next, a procedure for generating a search table for searching for adjustment coefficient sequences will be described with reference to Fig 8. Generation of the search table is carried out before the previously described adjustment coefficient sequence search.

(Step SC-1 in Fig. 8)

First, as a premise, a GuardCoeff value is set to 2 or 3, and an absolute value A used in the following is made 3 or less. Also, the position of the guard coefficient (GuardIndex) is an arbitrary value in this step, but with this example a GuardIndex that can handle a bit quantity increase or decrease value between 1-7 bits (Index 11 in this example) is searched for by sequentially examining from a high frequency side value (Index 16 with this example). The reasons for these settings will be additionally described below.

Setting of a value of absolute value A for numerical domain of TailCoeff to 3 or less:

(Reason) Since an encoding table used in Level of LeftPartCoeff varies in accordance with magnitude of the absolute value of TailCoeff, this variation can be suppressed by this parameter. Since the encoding table for Level varies with magnitude of absolute value of the level value set to a threshold of 0, 3, 6, 12, 24, 48, then in order to set the encoding table used for Level of the LeftPartCoeff independently of TailCoeff adjustment it is necessary to make magnitudes of all absolute values of coefficient values of TailCoeff 3 or less, among the previously decsribed thresholds.

Setting value of GuardCoeff to a coefficient of an absolute value of 2 or greater.

(Reason) With this setting code amount for parameters TrailingOnes, TrailingOnesFlag and RunBefore can be made independent in LeftPartCoeff and TailCoeff. In the case of a absolute value 0 or 1, there is a possibility of a coefficient of LeftPartCoeff also being made an object at the time of determining TrailingOnes, TrailingOnesFlag and RunBefore. This can be restricted by placing a coefficient of an absolute value of 2 or greater in the GuardCoeff.

The fact that GuardIndex value is 11 (case where a lowest frequency coefficient index is made 1).

(Reason) this parameter is obtained in association with generation of a search table that will be described below. The detail is as shown in Fig. 8, but an overview will be described in the following. Specifically, search for GuardIndex is commenced from a tail end position of the block coefficient sequence (namely the right end) with GuardCoeff set to 2 and absolute value A set to 3 or less, being the above described two conditions. In this case, for any combination of inputs also, search for a GuardIndex that can generate a TailCoeff for which all of bits from 1 to 7 can be adjusted is commenced when GuardIndex=11. In order to lighten processing load and increase speed, as will be described later, at the time of using the TailCoeff search table created beforehand, 11 can be considered favourable as the GuardIndex value, since it becomes necessary to generate a TailCoeff that is capable of adjustment with bit increase from 1 to 7 bits for any combination of inputs. In this regard, for example, for a particular input coefficient sequence, it is also assumed that if GuardIndex is 4 it is possible to adjust for bit amount of 1, 2, 5 or 6 bits, while if GuardIndex is 5 it is possible to adjust for bit amount of 2, 3, 5 or 7 bits. Specifically, it is also possible to switch GuardIndex in accordance with bit quantity requiring adjustment. It is therefore possible to set the setting value for GuardIndex to an appropriate value in accordance with operation (implementation) method.

Also, the FixedTailTotalCoeff of this example is set to 2.

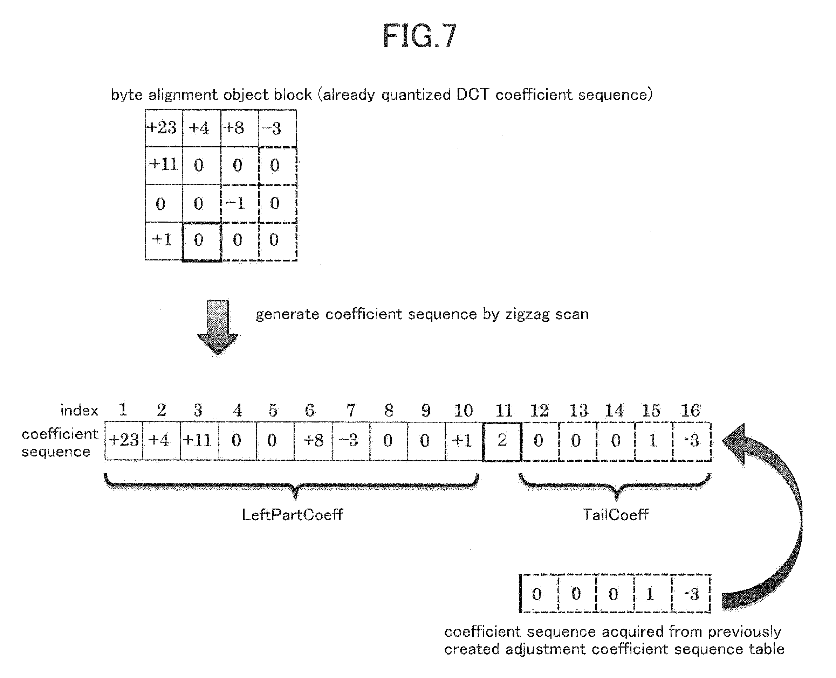

In the following, first of all LeftPartTotalCoeff (refer to Fig. 7) are all set to 0. Here, it is assumed that LeftPartTotalCoeff can be arbitrarily set for creation of the search table.

(SC-2 and SC-3 of Fig. 8)

For all cases where LeftPartTotalCoeff value is "from 0 to a maximum value (depending on the GuardIndex position) that LeftPartTotalCoeff can take", in order to carry out generation of an adjustment coefficient sequence, in the event that LeftPartTotalCoeff is smaller than GuardIndex, LeftPartCoeff is appropriately set such that the number of nonzero coefficients becomes LeftPartTotalCoeff, and a predetermined CAVLC table index is set to 0. The maximum value for this index is 3 with CAVLC.

(SC-4 and SC-5 of Fig. 8)

When the CAVLC table index is smaller than 4, BaseCoeff is set for TailCoeff, and variable length encoding is carried out. Then, a bit quantity after this encoding is made BaseCodeSize.

(SC-6 of Fig. 8)

For all combinations where integer values acting as absolute value A constitute respective elements of TailCoeff, block coefficient sequences are subjected to variable length encoding. Specifically, variable length encoding is carried out for all combinations from (-3, -3, -3, -3) to (3, 3, 3, 3), and a code amount at that time is made ArrangeCodeSize. A value of (ArrangeCodeSize - BaseCodeSize) mod 8 is made IncreaseCodeSize.

(Step SC-7 in Fig. 8)

Next, a group made up of IncreaseCodeSize and TailCoeff is output.

(SC-8 of Fig. 8)

It is determined whether TailCoeff exists in which TailTotalCoeff is the same as FixedTailTotalCoeff, and all of 1 to 7 bits of IncreaseCodeSize are satisfied. If the determination is Yes, processing advances to step SC-9. With this example the value of FixedTailTotalCoeff is fixed to 2. That is, adjustment coefficient sequences with a number of nonzero coefficients of other than 2 are cancelled. Here, fixing TailTotalCoeff to FixedTailTotalCoeff is performed for the following reason. Specifically, a table for variable length encoding (VLC table) changes depending on TailCoeff (also depending on other factors). TotalCoeff is the sum of LeftPartTotalCoeff, GuardTotalCoeff and TailTotalCoeff, and GuardTotalCoeff becomes 1 in this example. Accordingly, by fixing TailTotalCoeff all that has to be taken into acount is the effect of LeftPartTotalCoeff on TotalCoeff. LeftPartTotalCoeff serves as an index of the search table.

(Step SC-9 in Fig. 8)

Next, if there are a plurality of groups made up of IncreaseCodeSize and TailCoeff (adjustment coefficient sequence candidates), for respective 1 - 7 bits of IncreaseCodeSize, a single adjustment coefficient sequence is selected based on the following criteria, taking into consideration influence on image quality degradation. Adopting these criteria is in order to reduce visual effects as much as possible,

- Low cumulative total for coefficient sequence level value
- Coefficient being a higher frequency component.

(SC-10 of Fig. 8)

Next, groups made up of LeftPartTotalCoeff, VLCTableIndex, IncreaseCodeSize, and TailCoeff are registered in a search table.

(Step SC-11 in Fig. 8)

Next, 1 is added to the VLC TableIndex, and processing returns to step SC-4.

(SC-12 of Fig. 8)

If the decision in step SC-8 is No, the search table is nullified since conditions required to generate a TailCoeff for which adjustment of all of 1- 7 bits is possible are not satisfied for any input combinations, and any of GuardIndex or FixedTailTotalCoeff are set again. In the case of setting GuardIndex again, with this embodiment the value of GuardIndex is reduced by one. By repeating this operation, it is possible to search for an appropriate value of GuardIndex.

(Step SC-13 in Fig. 8)

If the decision in step SC-4 is No, 1 is added to LeftPartTotalCoeff, and step SC-2 is returned to. By repeating this operation, it is possible to generate corresponding search tables for all LeftPartTotalCoeff.
With the above-described processing it is possible to create the search table shown in Fig. 3.

(Second embodiment)

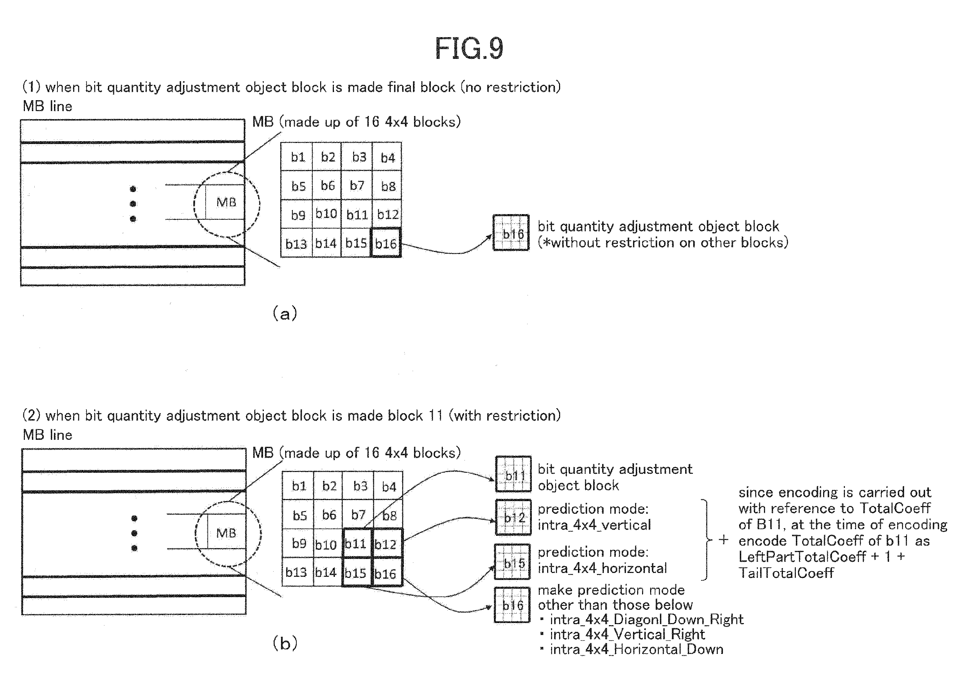

Next, a byte alignment procedure of a second embodiments will be described with further reference to Fig. 9.
With the previously described first embodiment, a block for carrying out byte alignment (namely an object block) is a final block within an MB (refer to Fig 9 (a)). In this case, since there are no blocks that reference the object block, even if the previously described coefficient sequence adjustment is carried out there is no danger of image quality degradation due to reference inconsistencies.
However, conversely, in the event that a block other than the final block is made the object of byte alignment, since there are blocks that reference this block it is necessary to restrict or fix reference information. This restriction or fixing is only required in the event that the encoding mode for these blocks is intra 4x4.
In the following description, it is assumed that the block b11 shown in Fig. 9(b) is the object of coefficient sequence adjustment. If this is the case, then for blocks that are adjacent to block B11, namely b12 (adjacent to the right), b15 (adjacent below) and b16 (adjacent diagonally below) it is necessary to fix or restrict the encoding mode, as shown in Fig. 9(b). Further, for blocks b12 and b15, encoding is carried assuming that TotalCoeff of b11 is a fixed value, and inconsistencies in encoding conditions are prevented. Specifically, with the example of Fig. 9(b), when b11 is made an object block for bit quantity adjustment,

b12 prediction mode: intra_4x4_Vertical
b15 prediction mode: intra_4x4_Horizontal
b16 prediction mode: prediction mode other than the following

- intra_4x4_Diagonal_Down_Right
- intra_4x4_Vertical_Right
- intra_4x4_Horizontal_Down

are set. Further, for b12 and b15, since encoding is carried out referencing TotalCoeff of b11, encoding is performed with TotalCoeff of b11 set to

$$LeftPartTotalCoeff + 1 + TailTotalCoeff$$

The present invention is not limited to the above-described embodiments, and various modifications can additionally be obtained within a scope that does not depart from the spirit of the invention.

For example, each of the above-described structural elements can exist as a functional block, and can also exist as independent hardware. Also, as a method of implementation, it is possible to use hardware or to use computer software. Further, a single functional element of the present invention may be realized as a set of a plurality of functional elements, and a plurality of functional elements of the present invention may be implemented by a single functional element.

It is also possible for each functional element constituting the present invention to exist separately. In the case of existing separately, necessary data can be exchanged by means of a network, for example. Similarly, it is also possible for each function of an internal part of each section to exist separately. For example, it is possible to implement each functional element, or some of the functional elements, of this embodiment using grid computing or cloud computing.

## Claims

1.  A byte alignment device, for carrying out byte alignment on bit streams that have been acquired by variable length encoding of a block coefficient sequence, comprising:

    a base coefficient sequence insertion section, a desired increased bit quantity calculation section, an adjustment coefficient sequence detection section, and an adjustment coefficient sequence insertion section, wherein
    the base coefficient sequence insertion section is configured to replace adjustment coefficient sequences, which are high-frequency components within quantized block coefficient sequences, with predetermined base coefficient sequences,
    the desired increased bit quantity calculation section is configured to calculate a bit quantity that is to be increased for byte alignment, based on code amount of a bit stream that has been acquired by subjecting the block coefficient sequences, that are the adjustment coefficient sequences that have been replaced by base coefficient sequences, to variable length encoding,
    the adjustment coefficient sequence detection section is configured to detect appropriate adjustment coefficient sequences that will replace base coefficient sequences, based on the bit quantity that is to be increased, and
    the adjustment coefficient sequence insertion section is configured to insert the adjustment coefficient sequences that have been detected into high-frequency components corresponding to the base coefficient sequences.

2.  The byte alignment device of claim 1, further comprising a guard coefficient insertion section, wherein
    the guard coefficient insertion section is configured to replace coefficients, that are positioned one coefficient closer to a low frequency side than the high frequency component coefficient sequence of the block coefficient sequences, with guard coefficients, and
    the guard coefficients restrict influence on code amount of the bit stream due to a value of a coefficient that is more to a low frequency side than a guard coefficient.

3.  The byte alignment device of claim 1 or claim 2, wherein the adjustment coefficient sequence detection section is configured to detect the appropriate adjustment coefficient sequence based on factors that influence code amount of the bit stream that has been subjected to variable length encoding, in addition to the bit quantity to be increased.

**4.** The byte alignment device of any one of claims 1 - 3, further comprising a search DB, and wherein the search DB is configured so that it is possible to detect the appropriate adjustment coefficient sequence based on the bit quantity to be increased and/or factors that influence code amount of the bit stream that has been subjected to variable length encoding.

**5.** A bit stream generating device, comprising the byte alignment device of any one of claims 1 - 4, and a variable length encoding section, wherein
the variable length encoding section, when subjecting adjacent block coefficient sequences, that are adjacent to object blocks that are the object of byte alignment by the byte alignment device, to variable length encoding, is configured to carry out restriction of a prediction mode of the encoding of the object blocks, and/or fix coefficient values used in encoding.

**6.** A bit stream generating method, used in order to carry out byte alignment on bit streams that have been acquired by variable length encoding of a block coefficient sequence, comprising:

a step of replacing adjustment coefficient sequences, that are a high-frequency components within quantized block coefficient sequences, with predetermined base coefficient sequences,
a step of calculating a bit quantity that is to be increased for byte alignment, based on code amount of a bit stream that has been acquired by subjecting the block coefficient sequences, that are the adjustment coefficient sequences that have been replaced by the base coefficient sequences, to variable length encoding,
a step of detecting appropriate adjustment coefficient sequences that are to replace the base coefficient sequences, based on bit quantity that is to be increased, and
a step of inserting the detected adjustment coefficient sequences into high-frequency components corresponding to the base coefficient sequences.

**7.** A computer program for causing execution of the method of claim 6 on a computer.

**8.** A data structure made up of block coefficient sequences, wherein
high-frequency component coefficients of the block coefficient sequences are made adjustment coefficient sequences for carrying out byte alignment of a bit stream that has been subjected to variable length encoding,
guard coefficients are inserted into coefficients that are one coefficient closer to the low-frequency side than the adjustment coefficient sequences, and
the guard coefficients suppress influence on variable length encoding conditions using values of low-frequency component coefficients that are closer to the low-frequency side than this guard coefficient.

# FIG.1

# FIG.2

# FIG.3

number of variable length tables
corresponding to NeighborTotalCoeff
(4 possibilities)

number of LeftPart
TotalCoeff
(11 possibilities)

| | 1bit | 2bit | | 7bit |
|---|---|---|---|---|
| 0 | 0,0,0,0,0 | 0,0,0,2,-3 | . . . . | 0,0,1,1,0 |
| 1 | 0,0,0,0,0 | 0,0,0,2,-3 | . . . . | 0,0,0,1,3 |
| ⋮ | | | | ⋮ |
| 1 0 | 0,0,0,0,0 | 0,0,0,1,3 | . . . . | 0,0,0,1,2 |

number of desired increased bit
quantity elements (7 possibilities)

# FIG.4

input signal — SA-1

↓

integer precision
conversion — SA-2

↓

quantization — SA-3

↓

byte alignment processing — SA-4 ←— search table
generation — SA-7

↓

variable length
encoding — SA-5

↓

bit stream output — SA-6

# FIG.5

commence byte alignment processing

acquire MB line code amount except for object block — SB-0

acquire quantized coefficient sequence — SB-1

GuardCoeff←2
GuardIndex←11
BaseCoeff←
(0,0,0,0,0) — SB-2

SB-3

first time to encode all MB lines ? — N

Y — SB-4

TailCoeff←BaseCoeff

SB-5

TailCoeff←TailCoeff acquired from table — SB-9

variable encoding of object block

SB-6

X←code amount of all MB lines

complete byte alignment processing

desired increased bit quantity←8 - (X mod 8) — SB-7

Acquire TailCoeff from TailCoeff search table based on desired increased bit quantity, LeftPartTotalCoeff, and NeighborTotalCoeff — SB-8

FIG.6

# FIG.7

byte alignment object block (already quantized DCT coefficient sequence)

| +23 | +4 | +8 | −3 |
|-----|-----|-----|-----|
| +11 | 0 | 0 | 0 |
| 0 | 0 | −1 | 0 |
| +1 | 0 | 0 | 0 |

generate coefficient sequence by zigzag scan

| index | 1 | 2 | 3 | 4 | 5 | 6 | 7 | 8 | 9 | 10 | 11 | 12 | 13 | 14 | 15 | 16 |
|-------|---|---|---|---|---|---|---|---|---|----|----|----|----|----|----|----|
| coefficient sequence | +23 | +4 | +11 | 0 | 0 | +8 | −3 | 0 | 0 | +1 | 2 | 0 | 0 | 0 | 1 | −3 |

LeftPartCoeff  TailCoeff

| 0 | 0 | 0 | 1 | -3 |
|---|---|---|---|----|

coefficient sequence acquired from previously created adjustment coefficient sequence table

FIG.8

search table creation completion

conditions
- GuardCoeff←2 or 3
- absolute value A<=3

GuardCoeff
GuardIndex
absolute value A
BaseCoeff
FixedTailTotalCoeff

SC-1

LeftPartTotalCoeff←0

SC-11
VLCTableIndex
←VLCTableIndex+1

SC-10
register groups of
(LeftPartTotalCoeff,
VLCTableIndex,
IncreaseCodeSize,
and TailCoeff)
in search table

SC-2
LeftPartTotalCoeff
<GuardIndex   N

Y

SC-3
- appropriately set LeftPart
  Coeff so as to give
  LeftPartTotalCoeff
- VLCTableIndex←0

SC-9
for TailCoeff belonging to respective Increase
CodeSize (in 7 ways),select on the following basis
- cumulative total of TailCoeff level vale is low
- cumulative total of coefficient index
  that is number of nonzero coefficients
  of TailCoeff is high

Y

SC-13
LeftPartTotalCoeff
←LeftPartTotalCoeff+1   N

SC-4
VLCTableIndex<4

SC-8
TailTotalCoeff==FixedTailTotalCorff
&&
(TailCoeff that satisfies
IncreaseCodeSize of 1 to 7 exists)   N

SC-12
nullify search table,
and set GuardIndex
and FixedTailTotalCoeff
parameters again

Y

SC-5
set TailCoeff to BaseCoeff and
perform variable length encoding
BaseCodeSize←code string bit
quantity

SC-6
- set all combinations of integer value
  for absolute value A for TailCoeff,
  and perform variable length encoding
- ArrangeCodeSize←encoding bit quantity
- IncreaseCodeSize←
  (ArrangeCodeSize-BaseCodeSize)%8

SC-7
(IncreaseCodeSize,TailCoeff)
output as a group

EP 2 773 110 A1

# FIG.9

(1) when bit quantity adjustment object block is made final block (no restriction)

MB line

MB (made up of 16 4x4 blocks)

| b1 | b2 | b3 | b4 |
| b5 | b6 | b7 | b8 |
| b9 | b10 | b11 | b12 |
| b13 | b14 | b15 | b16 |

b16 → bit quantity adjustment object block
(*without restriction on other blocks)

(a)

(2) when bit quantity adjustment object block is made block 11 (with restriction)

MB line

MB (made up of 16 4x4 blocks)

| b1 | b2 | b3 | b4 |
| b5 | b6 | b7 | b8 |
| b9 | b10 | b11 | b12 |
| b13 | b14 | b15 | b16 |

b11 → bit quantity adjustment object block

b12 → prediction mode: intra_4x4_vertical

b15 → prediction mode: intra_4x4_horizontal

since encoding is carried out with reference to TotalCoeff of B11, at the time of encoding + encode TotalCoeff of b11 as LeftPartTotalCoeff + 1 + TailTotalCoeff

b16 → make prediction mode other than those below
· intra_4x4_Diagonl_Down_Right
· intra_4x4_Vertical_Right
· intra_4x4_Horizontal_Down

(b)

**INTERNATIONAL SEARCH REPORT**

| International application No. |
| --- |
| PCT/JP2012/076815 |

A. CLASSIFICATION OF SUBJECT MATTER
*H04N7/30*(2006.01)i, *H03M7/40*(2006.01)i

According to International Patent Classification (IPC) or to both national classification and IPC

B. FIELDS SEARCHED

Minimum documentation searched (classification system followed by classification symbols)
H04N7/26-7/68, H03M7/00-7/50

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 7-160473 A  (Digital Equipment Corp.), 23 June 1995 (23.06.1995), entire text; all drawings & US 5363098 A          & EP 650264 A1 & DE 69413347 C | 1-8 |
| A | JP 7-222164 A  (Matsushita Electric Industrial Co., Ltd.), 18 August 1995 (18.08.1995), entire text; all drawings & US 5644306 A | 1-8 |

| ☒ | Further documents are listed in the continuation of Box C. | ☐ | See patent family annex. |
| --- | --- | --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 December, 2012 (13.12.12) | 25 December, 2012 (25.12.12) |

| Name and mailing address of the ISA/ Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2012/076815 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 11-243542 A  (Matsushita Electric Industrial Co., Ltd.), 07 September 1999 (07.09.1999), paragraphs [0067] to [0080]; fig. 16 to 21 & CA 2251420 A          & EP 917371 A2 & CN 1225545 A          & US 6332003 B1 & DE 69836893 D | 1-8 |
| A | WO 2009/093647 A1  (NEC Corp.), 30 July 2009 (30.07.2009), entire text; all drawings & US 2010/0290537 A1     & EP 2249567 A1 & TW 200948089 A | 1-8 |
| A | Naofumi UCHIHARA, Hiroyuki KASAI, "A Study on Video Delivery System with Free View-Area and Multiple Resolution Access for Multiple Users", IEICE Technical Report, 2010.01, vol.109, NS2009-157, pages 89 to 94 | 5 |

Form PCT/ISA/210 (continuation of second sheet) (July 2009)

**REFERENCES CITED IN THE DESCRIPTION**

**Patent documents cited in the description**

- WO 2009093647 A